# EUROPÄISCHE PATENTSCHRIFT

(11) **EP 3 517 797 B1**
(45) Veröffentlichungstag und Bekanntmachung des Hinweises auf die Patenterteilung: **24.02.2021**
(21) Anmeldenummer: 19150456.2
(22) Anmeldetag: 07.01.2019
(51) Int. Cl.: F16B 45/00, F16B 13/06

(54) **BEFESTIGER MIT EINEM HAKEN, BEFESTIGUNGSANORDNUNG UND VERFAHREN ZUR BEFESTIGUNG MIT DEM BEFESTIGER**
FIXING SYSTEM WITH A HOOK, FIXING ASSEMBLY AND METHOD FOR FIXING WITH THE FIXING SYSTEM
DISPOSITIF DE FIXATION DOTÉ D'UN CROCHET, AGENCEMENT DE FIXATION ET PROCÉDÉ DE FIXATION À L'AIDE DU DISPOSITIF DE FIXATION

(30) Priorität: 26.01.2018 DE 102018101762; 20.09.2018 DE 102018123109
(43) Veröffentlichungstag der Anmeldung: 31.07.2019
(73) Patentinhaber: fischerwerke GmbH & Co. KG, 72178 Waldachtal (DE)
(72) Erfinder: Kaupp, Andreas, 72280 Dornstetten (DE)
(74) Vertreter: Suchy, Ulrich Johannes

(56) Entgegenhaltungen:
- CN-Y- 2 258 932
- DE-U1- 29 822 935
- US-A1- 2012 272 507

## Beschreibung

Die Erfindung betrifft einen Befestiger mit einem Haken zum Einhängen eines Einhängeelements wie beispielsweise einer Öse, mit einem geraden Schaft, der in ein Ankerloch in einem Ankergrund aus beispielsweise Mauerwerk oder Beton einbringbar ist, und mit einem Spreizelement, das durch eine Axialbewegung in Bezug zum Schaft aufspreizbar ist, so dass der Befestiger durch Aufspreizen des Spreizelements in dem Ankerloch befestigbar ist. "Ankerloch" meint hier insbesondere eine zylindrische Bohrung, wie sie typischerweise zum Einbringen von Dübeln und Ankern in einem mineralischen Ankergrund wie Beton gebohrt wird. Der Befestiger weist eine gedachte erste Radialebene radial zu seinem Schaft an einem hakenseitigen Ende des geraden Schafts und eine gedachte erste Parallelebene parallel zu der ersten Radialebene und damit radial zum geraden Schaft auf. Die erste Radialebene befindet sich an einem Übergang vom geraden Schaft zum Haken oder jedenfalls dort, wo der Schaft nicht mehr gerade verläuft, sondern beispielsweise gebogen oder abgewinkelt ist. Der gerade Schaft lässt sich also so weit in das Ankerloch einbringen, dass sich die erste Radialebene an einer Mündung des Ankerlochs bzw. an einer Oberfläche des Ankergrundes befindet. Das gilt jedenfalls, wenn der Haken nicht vorher auf dem Ankergrund aufsitzt. Die zur ersten Radialebene parallele erste Parallelebene befindet sich auf einer dem Spreizelement abgewandten Seite der ersten Radialebene und weist einen Abstand von der ersten Radialebene auf, der einem kleinsten Durchmesser des Hakens entspricht. Der "Durchmesser" bezieht sich auf einen Querschnitt des Befestigers, also nicht etwa auf eine durch den Haken aufgespannte beziehungsweise umschriebene Fläche. Bei einem nicht kreisrunden Querschnitt ist mit "Durchmesser" der Durchmesser eines dem Querschnitt eingeschriebenen Innkreises gemeint.

Des Weiteren betrifft die Erfindung ein Verfahren zur Erstellung einer Befestigungsanordnung mit den Merkmalen des Oberbegriffs des Anspruchs 3.

Aufgabe der Erfindung ist, einen Befestiger vorzuschlagen, mit dem ein Aushängen eines in den Haken des Befestigers eingehängten Einhängeelements ausgeschlossen ist, wenn das Einhängeelement wie eine Öse geschlossen ist.

Diese Aufgabe wird erfindungsgemäß durch die Merkmale der Ansprüche 1 und 3 gelöst.

Wie oben beschrieben, weist der erfindungsgemäße Befestiger einen Haken, einen geraden Schaft und ein Spreizelement auf. "Haken" meint hier eine Art Ring, dessen Grundform von einem Kreis abweichen kann, und der in Umfangsrichtung nicht geschlossen ist, sondern eine Einhängeöffnung aufweist, deren lichte Weite größer als die Dicke des einzuhängenden Einhängeelements ist. Insbesondere ist die lichte Weite der Einhängeöffnung größer als oder gleich groß wie der kleinste Durchmesser des Hakens. Erfindungsgemäß befindet sich ein freies Ende des Hakens auf einer dem Spreizelement zugewandten Seite der ersten Parallelebene, die sich in einem dem kleinsten Durchmesser des Hakens entsprechenden Abstand von der ersten Radialebene auf der dem Spreizelement abgewandten Seite der ersten Radialebene befindet. Wie ebenfalls oben beschrieben, befindet sich die erste Radialebene an dem hakenseitigen Ende des geraden Schafts. Das bedeutet, dass sich das freie Ende des Hakens auf einer dem Spreizelement zugewandten Seite der ersten Radialebene, an der ersten Radialebene oder auf der dem Spreizelement abgewandten Seite der ersten Radialebene befindet, dort allerdings in einem Abstand von der ersten Radialebene, der kleiner als der kleinste Durchmesser des Hakens ist.

Sofern sich das freie Ende des Hakens auf der dem Spreizelement zugewandten Seite der ersten Radialebene oder an der ersten Radialebene befindet, lässt sich der gerade Schaft des Befestigers so tief in ein Ankerloch in einem Ankergrund einbringen, bis das freie Ende des Hakens auf dem Ankergrund aufsitzt. Das gilt für einen Ankergrund mit ebener Oberfläche und zur Oberfläche des Ankergrunds senkrechtem Ankerloch. Ein in den Haken des Befestigers eingehängtes Einhängeelement lässt sich dann nicht mehr durch eine Einhängeöffnung des Hakens aus dem Haken aushängen. Befindet sich das freie Ende des Hakens des erfindungsgemäßen Befestigers auf der dem Spreizelement abgewandten Seite der ersten Radialebene, lässt sich der Befestiger bis zu dem hakenseitigen Ende seines geraden Schafts in das gerade Ankerloch einbringen, so dass sich die erste Radialebene an der Mündung des Ankerlochs und an der Oberfläche des Ankergrunds befindet. Ein Abstand des freien Endes des Hakens von der Oberfläche des Ankergrunds ist dann kleiner als der kleinste Durchmesser des Hakens.

Auch in diesem Fall lässt sich ein in den Haken des Befestigers eingehängtes Einhängeelement nicht durch die Einhängeöffnung des Hakens aushängen, vorausgesetzt ein kleinster Durchmesser des Einhängeelements ist mindestens so groß wie der kleinste Durchmesser des Hakens. Auch das gilt für einen Ankergrund mit ebener Oberfläche und ein zur Oberfläche des Ankergrunds senkrechtes Ankerloch. Das heißt, der Abstand der ersten Parallelebene von der ersten Radialebene soll kleiner als der kleinste Durchmesser des Einhängeelements sein, um das Aushängen eines in den Haken des Befestigers eingehängten Einhängeelements zu vermeiden.

Als Spreizelement kann der erfindungsgemäße Befestiger beispielsweise einen Keil aufweisen, der auf einer schräg in einem spitzen Winkel zur Längsrichtung des Schafts des Befestigers verlaufenden Schrägfläche verschiebbar ist und durch die Axialbewegung des Schafts relativ zu dem Keil radial vom Schaft nach außen gedrückt und der Schaft in dem Ankerloch befestigt wird. Das Nach-außen-drücken des Keils kann als Aufspreizen des Spreizelements aufgefasst werden. Eine Ausgestaltung der Erfindung sieht eine am Schaft angeordnete und in der Längsrichtung des Schafts relativ zum Schaft verschiebbare Spreizhülse vor. Durch die Axialbewegung des Schafts wird ein konisches Spreizelement des Schafts in die Spreizhülse eingezogen und diese dadurch aufgeweitet, wodurch der Schaft im Ankerloch befestigt wird. Das Aufweiten der Spreizhülse wird hier als Aufspreizen bezeichnet.

Die Erfindung sieht eine Setztiefenmarkierung am geraden Schaft des Befestigers vor. Die Setztiefenmarkierung kann beispielsweise eine Farbmarkierung, ein Rändel oder eine Rillung sein. Sie kann sich am hakenseitigen Ende des geraden Schafts befinden oder in Richtung des Spreizelements vom hakenseitigen Ende des geraden Schafts versetzt sein. Die Setztiefenmarkierung zeigt an, wie weit der Schaft des Befestigers mindestens für eine planmäßige Befestigung in das Ankerloch eingebracht, also eingesteckt oder eingeschlagen werden muss. An der Setztiefenmarkierung weist der Befestiger eine gedachte, zweite Radialebene auf. Außerdem weist der Befestiger eine gedachte, zweite Parallelebene parallel zur zweiten Radialebene auf einer dem Spreizelement abgewandten Seite der zweiten Radialebene auf. Ein Abstand der zweiten Parallelebene von der zweiten Radialebene ist kleiner als der kleinste Durchmesser des Hakens oder des Einhängeelements. Wird der Befestiger bis zur Setztiefenmarkierung in das Ankerloch eingebracht, ist der Abstand des freien Endes seines Hakens vom Ankergrund kleiner als der kleinste Durchmesser des Hakens oder des Einhängeelements, so dass das in den Haken eingehängte Einhängeelement nicht durch die Einhängeöffnung des Hakens aushängbar ist. Die obigen Erläuterungen zum Abstand des freien Endes des Hakens vom Ankergrund und zur Verhinderung des Aushängens des Einhängeelements durch die Einhängeöffnung des Hakens des Befestigers gelten entsprechend. Die zweite Radialebene und die zweite Parallelebene sind von der ersten Radialebene und der ersten Parallelebene so weit entfernt wie die Setztiefenmarkierung vom hakenseitigen Ende des geraden Schafts des Befestigers. Befindet sich die Setztiefenmarkierung am hakenseitigen Ende des geraden Schafts, fallen die Ebenen zusammen, das heißt die erste und die zweite Radialebene sind in diesem Fall identisch und ebenso die erste und die zweite Parallelebene.

Die erfindungsgemäße Befestigungsanordnung weist einen Befestiger mit einem Haken, einem geraden Schaft und einem Spreizelement auf. Der Schaft ist in einem geraden Ankerloch in einem Ankergrund angeordnet und das Spreizelement ist durch eine Axialbewegung des Schafts in Bezug zum Spreizelement aufgespreizt, so dass es den Schaft und damit den Befestiger im Ankerloch im Ankergrund befestigt. Ein freies Ende des Hakens liegt am Ankergrund an oder weist einen Abstand vom Ankergrund auf, der kleiner als ein kleinster Durchmesser eines Einhängeelements ist, das in den Haken des Befestigers eingehängt ist, so dass sich das Einhängeelement nicht durch eine Einhängeöffnung des Hakens aushängen lässt. Sofern das Einhängeelement wie eine Öse oder eine Schlaufe geschlossen ist, lässt es sich nicht aus dem Haken aushängen.

Das erfindungsgemäße Verfahren sieht vor, den Schaft des Befestigers zunächst nur so tief in das Ankerloch einzubringen, dass das Einhängeelement durch die Einhängeöffnung des Hakens in den Haken eingehängt werden kann. Der Abstand des freien Endes des Hakens ist bis dahin noch mindestens so groß wie der kleinste Durchmesser des Einhängeelements. Anschließend wird das Einhängeelement in den Haken eingehängt und der Schaft des Befestigers tiefer in das Ankerloch eingebracht, bis der Abstand des freien Endes des Hakens kleiner als der kleinste Durchmesser des Einhängeelements ist. Das Einhängeelement kann jetzt nicht mehr durch die Einhängeöffnung des Hakens ausgehängt werden.

Eine Weiterbildung des Verfahrens sieht vor, dass der Schaft des Befestigers so tief in das Ankerloch eingebracht wird, dass auch nach einer Rückbewegung des Schafts entgegen seiner Einbringrichtung zum Aufspreizen des Spreizelements zur Befestigung des Befestigers in dem Ankerloch der Abstand des freien Endes des Hakens kleiner als der kleinste Durchmesser des in den Haken eingehängten Einhängeelements ist.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand eines in der Zeichnung dargestellten Ausführungsbeispiels näher erläutert. Es zeigen:
- Figur 1: einen erfindungsgemäßen Befestiger in Seitenansicht;
- Figur 2: eine erfindungsgemäße Befestigungsanordnung; und
- Figur 3: ein Einhängeelement der Befestigungsanordnung aus Figur 2 in Seitenansicht.

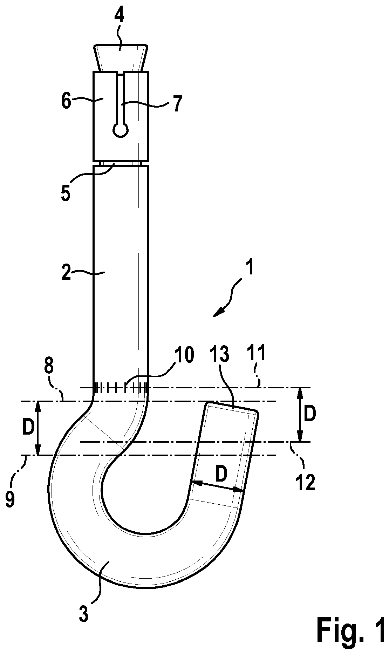

Der in Figur 1 dargestellte, erfindungsgemäße Befestiger 1 weist einen geraden Schaft 2 und einen Haken 3 an einem hakenseitigen Ende des geraden Schafts 2 auf. An einem dem Haken 3 fernen Ende weist der Befestiger 1 einen Spreizkonus 4 auf, der sich in Richtung des Hakens 3 verjüngt und der mit einem zylindrischen Halsabschnitt 5 mit dem Schaft 2 einstückig verbunden ist. Der Halsabschnitt 5 weist einen kleineren Durchmesser auf, als der zwischen dem Haken 3 und dem Halsabschnitt 5 angeordnete Schaft 2. Der Spreizkonus 4, der Halsabschnitt 5 und der Schaft 2 sind gleichachsig. Der gerade Schaft 2 und der Haken 3 weisen einen Kreisquerschnitt mit dem Durchmesser D auf.

Auf dem Halsabschnitt 5 ist eine Spreizhülse als Spreizelement 6 angeordnet, die ein Stück weit auf den Spreizkonus 4 ragt. Die Spreizhülse ist axial, das heißt in Längsrichtung des geraden Schafts 2 auf dem Halsabschnitt 5 Ver- und auf den Spreizkonus 4 aufschiebbar. Die Spreizhülse weist in Längsrichtung verlaufende Schlitze 7 auf, damit sie durch Aufschieben auf den Spreizkonus 4 aufweitbar ist, was hier auch als Aufspreizen der Spreizhülse bzw. des Spreizelements 6 bezeichnet wird.

An dem hakenseitigen Ende des geraden Schafts 2, also dort, wo der gerade Schaft 2 mit einer Biegung in den Haken 3 übergeht, weist der Befestiger 1 eine gedachte erste Radialebene 8 und auf einer dem Spreizkonus 4 und dem Spreizelement 6 abgewandten Seite der ersten Radialebene 8 eine ebenfalls gedachte erste Parallelebene 9 parallel zur ersten Radialebene 8 auf. Ein Abstand der ersten Parallelebene 9 von der ersten Radialebene 8 entspricht dem Durchmesser D des Hakens 3 und des Schafts 2.

Von dem hakenseitigen Ende des geraden Schafts 2 um weniger als dem Durchmesser D des Hakens 3 und des Schafts 2 in Richtung des Spreizkonus 4 und des Spreizkörpers 6 versetzt weist der gerade Schaft 2 eine Setztiefenmarkierung 10 auf, die im Ausführungsbeispiel als Parallelrändel ausgeführt ist. Andere Setztiefenmarkierungen wie eine Farbmarkierung, ein anderer Rändel oder eine Rillung sind möglich (nicht dargestellt). An der Setztiefenmarkierung 10 weist der Befestiger 1 eine gedachte zweite Radialebene 11 und auf der dem Spreizkonus 4 und dem Spreizelement 6 abgewandten Seite der zweiten Radialebene 11 eine gedachte zweite Parallelebene 12 parallel zur zweiten Radialebene 11 auf. Ein Abstand der zweiten Parallelebene 12 von der zweiten Radialebene 11 entspricht ebenfalls dem Durchmesser D des Hakens 3 und des Schafts 2 des Befestigers 1. Weil die beiden Parallelebenen 9, 12 parallel zu den beiden Radialebenen 8, 11 und radial zum geraden Schaft 2 sind, sind sie ebenfalls Radialebenen, die hier zur Unterscheidung von den beiden Radialebenen 8, 11 als Parallelebenen 9, 12 bezeichnet werden.

Ein freies Ende 13 des Hakens 3, das sich radial neben dem geraden Schaft 2 des Befestigers 1 befindet, befindet sich im Ausführungsbeispiel an der ersten Radialebene 8 am hakenseitigen Ende des geraden Schafts 2 und auf einer dem Spreizelement 6 zugewandten Seite der ersten Parallelebene 9 und, sofern die Setztiefenmarkierung 10 und damit die zweite Radialebene 11 und die zweite Parallelebene 12 vorhanden sind, auf der dem Spreizelement 6 zugewandten Seite der zweiten Parallelebene 12.

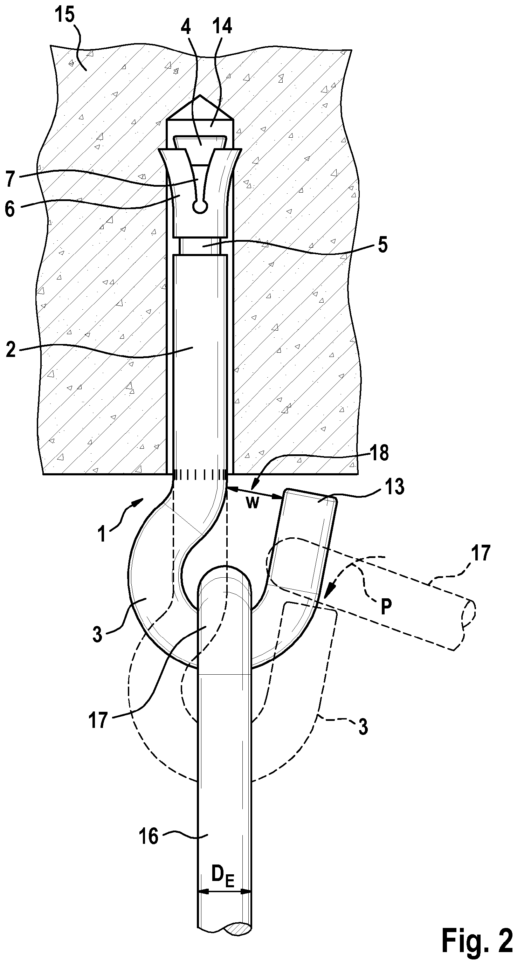

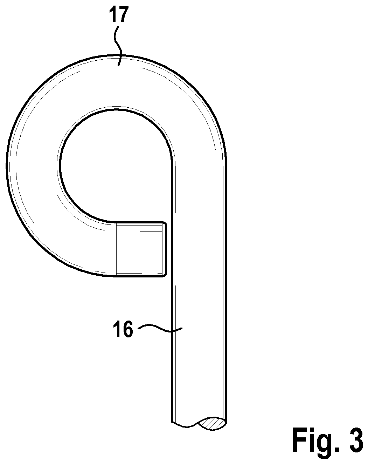

Der erfindungsgemäße Befestiger 1 ist für eine Deckenabhängung vorgesehen, wie sie Figur 2 zeigt. Dafür wird ein gerades Ankerloch 14 vorzugsweise senkrecht zu einer insbesondere ebenen Unterseite einer Decke aus beispielsweise Beton in die Decke gebohrt, die einen Ankergrund 15 bildet. In das Ankerloch 14 wird der Befestiger 1 mit dem Spreizkonus 4 und der das Spreizelement 6 bildenden Spreizhülse voraus zunächst so tief in das Ankerloch 14 eingebracht, dass ein Abstand des freien Endes 13 des Hakens 3 vom Ankergrund 15 so groß ist, dass ein Abhänger 16 in den Haken 3 des Befestigers 1 einhängbar ist. Der Haken 3 weist hierzu eine Einhängeöffnung 18 auf, deren lichte Weite w größer als der Durchmesser D des Hakens 3 und größer als der Durchmesser D_{E} eines Einhängeelements 17 des Abhängers 16 ist. Im Ausführungsbeispiel ist der Abhänger 16, der in Figur 3 als Einzelteil von der Seite gezeigt ist, ein Runddraht mit ungefähr dem gleichen Durchmesser wie der Haken 3 des Befestigers 1. Ein Ende des Abhängers 16 ist zu einer Öse gebogen, die das Einhängeelement 17 bildet. Die Position des Befestigers 1, in der das Einhängeelement 17 des Abhängers 16 in den Haken 3 einhängbar ist, ist in Figur 2 mit Strichlinien und das Einhängen des Einhängeelements 17 mit einem Strichlinienpfeil P dargestellt.

Nach dem Einhängen des Einhängeelements 17 in den Haken 3 des Befestigers 1 wird der Befestiger 1 tiefer in das Ankerloch 14 eingebracht, bis sich die Setztiefenmarkierung 10 mindestens an einer Mündung des Ankerlochs 14 und damit an der Unterseite der Decke befindet, die eine Oberfläche des Ankergrunds 15 bildet. Diese Position des Befestigers 1 ist in Figur 2 mit durchgezogenen Linien gezeichnet. Es befindet sich dann die zweite Radialebene 11 an der Oberfläche des Ankergrunds 15. Die erste und die zweite Radialebene 8, 11 und die erste und die zweite Parallelebene 9, 12 sind der besseren Anschaulichkeit wegen in Figur 2 nicht gezeichnet. Ein Abstand des freien Endes 13 des Hakens 3 vom Ankergrund 15 ist kleiner als der Durchmesser D des Hakens 3 und als der Durchmesser der Öse des Abhängers 16, die das Einhängeelement 17 bildet. Der Abhänger 16 bzw. das Einhängeelement 17 kann jetzt nicht mehr ausgehängt werden.

Zum tieferen Einbringen des Befestigers 1 in das Ankerloch 14 nach dem Einhängen des Einhängeelements 17 in den Haken 3 kann der Abhänger 16 zur Seite geschwenkt werden (nicht dargestellt), so dass Hammerschläge axial oder achsparallel zum geraden Schaft 2 des Befestigers 1 auf den Haken 3 ausgeübt werden können.

Der Befestiger 1 kann auch tiefer in das Ankerloch 14 eingebracht werden, maximal bis entweder das freie Ende 13 des Hakens 3 oder der Übergang des Befestigers 1 vom geraden Schaft 2 in den Haken 3 am hakenseitigen Ende des geraden Schafts 2 am Ankergrund 15 aufsitzt.

Durch eine Rückbewegung des Befestigers 1 entgegen der Einbringrichtung in das Ankerloch 14 wird der Spreizkonus 4 in die das Spreizelement 6 bildende Spreizhülse eingezogen und die Spreizhülse aufgespreizt, so dass sie den Befestiger 1 im Ankerloch 14 befestigt. Die Rückbewegung entgegen der Einbringrichtung des Befestigers 1 bedeutet eine Axialbewegung des Schafts 2 und mit ihm des Spreizkonus 4 relativ zum Spreizelement 6. Die Rückbewegung ist so kurz, dass der Abstand des freien Endes 13 des Hakens 3 vom Ankergrund 15 so klein bleibt, dass die das Einhängeelement 17 bildende Öse des Abhängers 16 nicht aus dem Haken 3 ausgehängt werden kann. Das gilt auch für einen maximalen Spreizweg bzw. auch dann, wenn sich das Ankerloch 14 beispielsweise infolge einer Rissbildung im Ankergrund 15 aufweitet und der Befestiger 1 sich erneut entgegen der Einbringrichtung bewegt und das Spreizelement 6 weiter aufspreizt, so dass der Befestiger 1 im Ankerloch 14 befestigt bleibt. Diese erneute Bewegung des Befestigers 1 entgegen der Einbringrichtung bei einer Aufweitung des Ankerlochs 14 wird auch als "Nachspreizen" bezeichnet.

Die in Figur 2 gezeigte Befestigung des Einhängeelements 17 am Ankergrund 15 mit dem planmäßig montierten Befestiger 1 bildet eine Befestigungsanordnung, bei der sich das Einhängeelement 17 nicht aus dem Haken 3 aushängen lässt. Das beschriebene Verfahren zur Erstellung der Befestigungsanordnung oder jedenfalls ein Teil seiner Verfahrensschritte stellen ein erfindungsgemäßes Verfahren dar.

### Bezugszeichenliste

### Befestiger mit einem Haken, Befestigungsanordnung und Verfahren zur Befestigung mit dem Befestiger

- 1: Befestiger
- 2: gerader Schaft
- 3: Haken
- 4: Spreizkonus
- 5: Halsabschnitt
- 6: Spreizelement
- 7: Schlitz
- 8: erste Radialebene
- 9: erste Parallelebene
- 10: Setztiefenmarkierung
- 11: zweite Radialebene
- 12: zweite Parallelebene
- 13: freies Ende des Hakens 3
- 14: Ankerloch
- 15: Ankergrund
- 16: Abhänger
- 17: Einhängeelement
- 18: Einhängeöffnung
- D: Durchmesser des Hakens 3
- D_{E}: Durchmesser des Einhängeelements 17
- P: Strichlinienpfeil
- w: lichte Weite der Einhängeöffnung 18

## Patentansprüche

1. Befestiger, mit einem Haken (3), mit einem geraden Schaft (2), der in ein Ankerloch (14) in einem Ankergrund (15) einbringbar ist, und mit einem Spreizelement (6), das durch eine Axialbewegung relativ zum Schaft (2) aufspreizbar ist, wobei der Befestiger (1) durch Aufspreizen des Spreizelements (6) in dem Ankerloch (14) befestigbar ist und wobei der Befestiger (1) eine gedachte erste Radialebene (8) radial zu seinem Schaft (2) an einem hakenseitigen Ende des geraden Schafts (2) und eine zu der ersten Radialebene (8) parallele, gedachte erste Parallelebene (9) aufweist, die sich auf einer dem Spreizelement (6) abgewandten Seite der ersten Radialebene (8) befindet und deren Abstand von der ersten Radialebene (8) einem kleinsten Durchmesser (D) des Hakens (3) entspricht, wobei sich ein freies Ende (13) des Hakens (3) auf einer dem Spreizelement (6) zugewandten Seite der ersten Parallelebene (9) befindet, so dass der Schaft (2) des Befestigers (1) so tief in das Ankerloch (14) einbringbar ist, dass ein Abstand des freien Endes (13) des Hakens (3) von dem Ankergrund (15) kleiner als der kleinste Durchmesser (D) des Hakens (3) ist, **dadurch gekennzeichnet, dass** der gerade Schaft (2) eine Setztiefenmarkierung (10) in einer gedachten zweiten Radialebene (11) des Schafts (2) und eine zu der zweiten Radialebene (11) parallele, gedachte zweite Parallelebene (12) aufweist, die sich auf einer dem Spreizelement (6) abgewandten Seite der zweiten Radialebene (11) befindet und deren Abstand von der zweiten Radialebene (11) dem kleinsten Durchmesser (D) des Hakens (3) entspricht, und dass sich das freie Ende (13) des Hakens (3) auf einer dem Spreizelement (6) zugewandten Seite der zweiten Parallelebene (12) befindet.

2. Befestiger nach Anspruch 1, **dadurch gekennzeichnet, dass** der Befestiger (1) eine Spreizhülse als Spreizelement (6) aufweist.

3. Verfahren zur Erstellung einer Befestigungsanordnung mit einem Befestiger (1), der einen Haken (3), einen geraden Schaft (2) und ein Spreizelement (6) aufweist, wobei der Schaft (2) in einem geraden Ankerloch (14) in einem Ankergrund (15) angeordnet und durch das Spreizelement (6), das durch eine Axialbewegung in Bezug zum Schaft (2) aufgespreizt ist, in dem Ankerloch (14) befestigt ist, wobei in den Haken (3) ein Einhängeelement (17) eingehängt ist und dass sich ein freies Ende (13) des Hakens (3) näher an dem Ankergrund (15) befindet als ein kleinster Durchmesser (D_{E}) des Einhängeelements (17), wobei der Schaft (2) des Befestigers (1) so tief in das gerade Ankerloch (14) eingebracht wird, dass der Abstand des freien Endes (13) des Hakens (3) des Befestigers (1) von dem Ankergrund (15) so groß ist, dass das Einhängeelement (17) in den Haken (3) eingehängt werden kann, wobei danach das Einhängeelement (17) in den Haken (3) eingehängt wird und wobei danach der Schaft (2) so tief in das Ankerloch (14) eingebracht wird, dass ein Abstand des freien Endes (13) des Hakens (3) des Befestigers (1) von dem Ankergrund (15) so klein ist, dass das Einhängeelement (17) nicht mehr aus dem Haken (3) ausgehängt werden kann.

4. Verfahren nach Anspruch 3, **dadurch gekennzeichnet, dass** das Einhängeelement (17) geschlossen ist oder eine Einhängeöffnung aufweist, deren lichte Weite kleiner als der kleinste Durchmesser (D) des Hakens (3) ist.

5. Verfahren nach Anspruch 3 oder 4, **dadurch gekennzeichnet, dass** der Schaft (2) des Befestigers (1) nach dem Einhängen des Einhängeelements (17) so tief in das Ankerloch (14) eingebracht wird, dass nach einer Rückbewegung des Schafts (2) entgegen seiner Einbringrichtung in das Ankerloch (14) zum Aufspreizen des Spreizelements (6) zur Befestigung des Befestigers (1) in dem Ankerloch (14) in dem Ankergrund (15) der Abstand des freien Endes (13) des Hakens (3) des Befestigers (1) von dem Ankergrund (15) so klein ist, dass das Einhängeelement (17) nicht mehr aus dem Haken (3) ausgehängt werden kann.

## Claims

1. Fixing device, having a hook (3), having a straight shank (2) which is introducible into an anchoring hole (14) in an anchoring substrate (15), and having an expansion element (6) which is expansible by an axial movement relative to the shank (2), wherein the fixing device (1) is fixable in the anchoring hole (14) by expansion of the expansion element (6) and wherein the fixing device (1) has a notional first radial plane (8) radial with respect to its shank (2) at a hook-side end of the straight shank (2) and a notional first parallel plane (9) parallel to the first radial plane (8), which first parallel plane is located on a side of the first radial plane (8) that faces away from the expansion element (6) and the spacing of which from the first radial plane (8) corresponds to a smallest diameter (D) of the hook (3), wherein a free end (13) of the hook (3) is located on a side of the first parallel plane (9) that faces towards the expansion element (6) so that the shank (2) of the fixing device (1) is introducible into the anchoring hole (14) to a depth such that a spacing of the free end (13) of the hook (3) from the anchoring substrate (15) is smaller than the smallest diameter (D) of the hook (3), **characterised in that** the straight shank (2) has a setting depth marker (10) in a notional second radial plane (11) of the shank (2) and a notional second parallel plane (12) parallel to the second radial plane (11), which second parallel plane is located on a side of the second radial plane (11) that faces away from the expansion element (6) and the spacing of which from the second radial plane (11) corresponds to the smallest diameter (D) of the hook (3), and the free end (13) of the hook (3) is located on a side of the second parallel plane (12) that faces towards the expansion element (6).

2. Fixing device according to claim 1, **characterised in that** the fixing device (1) has an expansion sleeve as expansion element (6).

3. Method for creating a fixing arrangement having a fixing device (1) which has a hook (3), a straight shank (2) and an expansion element (6), wherein the shank (2) is arranged in a straight anchoring hole (14) in an anchoring substrate (15) and is fixed in the anchoring hole (14) by the expansion element (6) that has been expanded by an axial movement in relation to the shank (2), wherein a mounting element (17) is mounted in the hook (3), and a free end (13) of the hook (3) is located closer to the anchoring substrate (15) than a smallest diameter (D_{E}) of the mounting element (17), wherein the shank (2) of the fixing device (1) is introduced into the straight anchoring hole (14) to a depth such that the spacing of the free end (13) of the hook (3) of the fixing device (1) from the anchoring substrate (15) is sufficiently large that the mounting element (17) can be mounted in the hook (3), the mounting element (17) subsequently being mounted in the hook (3) and the shank (2) subsequently being introduced into the anchoring hole (14) to a depth such that a spacing of the free end (13) of the hook (3) of the fixing device (1) from the anchoring substrate (15) is sufficiently small that the mounting element (17) can no longer be demounted from the hook (3).

4. Method according to claim 3, **characterised in that** the mounting element (17) is closed or has a mounting opening the inside width of which is smaller than the smallest diameter (D) of the hook (3).

5. Method according to claim 3 or 4, **characterised in that,** after mounting of the mounting element (17), the shank (2) of the fixing device (1) is introduced into the anchoring hole (14) to a depth such that, once the shank (2) has moved back in a direction opposite to the direction of its introduction into the anchoring hole (14) to expand the expansion element (6) for fixing the fixing device (1) in the anchoring hole (14) in the anchoring substrate (15), the spacing of the free end (13) of the hook (3) of the fixing device (1) from the anchoring substrate (15) is sufficiently small that the mounting element (17) can no longer be demounted from the hook (3).

## Revendications

1. Dispositif de fixation comprenant un crochet (3), un fût rectiligne (2) pouvant être inséré dans un trou d'ancrage (14) pratiqué dans une base d'ancrage (15), et un élément déployable (6) pouvant être déployé sous l'effet d'un mouvement axial par rapport audit fût (2), le dispositif de fixation (1) pouvant être fixé par déploiement dudit élément déployable (6) dans le trou d'ancrage (14), et ledit dispositif de fixation (1) comportant un premier plan radial virtuel (8), radialement par rapport à son fût (2), à une extrémité dudit fût rectiligne (2) située côté crochet, et un premier plan virtuel (9) qui est parallèle audit premier plan radial (8), est disposé sur un côté dudit premier plan radial (8) pointant à l'opposé de l'élément déployable (6), et dont la distance le séparant dudit premier plan radial (8) correspond à un diamètre minimal (D) du crochet (3), une extrémité libre (13) dudit crochet (3) étant située sur un côté dudit premier plan parallèle (9) qui est tourné vers ledit élément déployable (6), de telle sorte que le fût (2) dudit dispositif de fixation (1) puisse être inséré, dans le trou d'ancrage (14), d'une profondeur telle qu'une distance, comprise entre ladite extrémité libre (13) du crochet (3) et la base d'ancrage (15), soit plus petite que ledit diamètre minimal (D) dudit crochet (3), **caractérisé par le fait que** le fût rectiligne (2) est pourvu d'un repère (10) de profondeur d'installation, dans un second plan radial virtuel (11) dudit fût (2), et d'un second plan virtuel (12) qui est parallèle audit second plan radial (11), est disposé sur un côté dudit second plan radial (11) pointant à l'opposé de l'élément déployable (6), et dont la distance le séparant dudit second plan radial (11) correspond au diamètre minimal (D) du crochet (3) ; et **par le fait que** l'extrémité libre (13) dudit crochet (3) est située sur un côté dudit second plan parallèle (12) qui est tourné vers ledit élément déployable (6).

2. Dispositif de fixation selon la revendication 1, **caractérisé par le fait que** ledit dispositif de fixation (1) est muni d'une douille expansible en tant qu'élément déployable (6).

3. Procédé d'instauration d'un ensemble de fixation doté d'un dispositif de fixation (1) comprenant un crochet (3), un fût rectiligne (2) et un élément déployable (6), sachant que ledit fût (2) est logé dans un trou rectiligne d'ancrage (14) pratiqué dans une base d'ancrage (15), et est fixé dans ledit trou d'ancrage (14) par l'intermédiaire dudit élément déployable (6) déployé sous l'effet d'un mouvement axial par rapport audit fût (2), sachant qu'un élément de suspension (17) est accroché dans le crochet (3), et qu'une extrémité libre (13) dudit crochet (3) se trouve plus près de la base d'ancrage (15) qu'un diamètre minimal (D_{E}) dudit élément de suspension (17), ledit fût (2) du dispositif de fixation (1) étant inséré, dans le trou rectiligne d'ancrage (14), d'une profondeur telle que la distance, comprise entre ladite extrémité libre (13) du crochet (3) du dispositif de fixation (1) et ladite base d'ancrage (15), présente une valeur propre à autoriser un accrochage de l'élément de suspension (17) dans le crochet (3), ledit élément de suspension (17) étant ensuite accroché dans ledit crochet (3), après quoi ledit fût (2) est inséré, dans ledit trou d'ancrage (14), d'une profondeur telle qu'une distance, comprise entre ladite extrémité libre (13) dudit crochet (3) du dispositif de fixation (1) et ladite base d'ancrage (15), présente une faible valeur telle que ledit élément de suspension (17) ne puisse plus être dissocié d'avec ledit crochet (3).

4. Procédé selon la revendication 3, **caractérisé par le fait que** l'élément de suspension (17) est fermé, ou présente une ouverture de suspension dont la largeur intérieure est plus petite que le diamètre minimal (D) du crochet (3).

5. Procédé selon la revendication 3 ou 4, **caractérisé par le fait que** le fût (2) du dispositif de fixation (1) est inséré dans le trou d'ancrage (14), après l'accrochage de l'élément de suspension (17), d'une profondeur telle qu'à l'issue d'un mouvement rétrograde dudit fût (2) en sens inverse de sa direction d'insertion dans ledit trou d'ancrage (14), en vue du déploiement de l'élément déployable (6) ciblant la fixation dudit dispositif de fixation (1) dans ledit trou d'ancrage (14) pratiqué dans la base d'ancrage (15), la distance comprise entre l'extrémité libre (13) dudit crochet (3) du dispositif de fixation (1), et ladite base d'ancrage (15), présente une faible valeur telle que ledit élément de suspension (17) de puisse plus être dissocié d'avec ledit crochet (3).
